# EUROPEAN PATENT APPLICATION

(11) **EP 4 140 610 A1**
(43) Date of publication of application: **01.03.2023**
(21) Application number: 21866141.1
(22) Date of filing: 04.09.2021
(51) Int. Cl.: B21D 1/14, B21D 1/12

(54) **DEVICE FOR RESTORING THE BODYWORK OF A VEHICLE**

(30) Priority: 08.09.2020 ES 202031956 U; 03.09.2021 ES 202131772 U
(60) Divisional application: 22202626.2
(71) Applicant: Telwin S.p.A., 36030 Villaverla (VI) (IT)
(72) Inventor: Alemany Peñarrubia, Jose, 46290 Alcacer (Valencia) (ES)
(74) Representative: Petraz, Davide Luigi
(86) International application number: PCT/ES2021/070647
(87) International publication number: WO 2022/053729

(57) **Abstract**

Disclosed is a device for restoring the panel of a vehicle, comprising a support platform with wheels for transporting same, which is arranged to secure to a base plate of the platform a post with a crossbeam, for mounting pulleys at different heights and in different directions so as to stretch the panel of the vehicle. For this purpose, the base plate is able to descend to the ground, the wheels remaining in a plane elevated above the ground, to immobilise the platform. A vacuum generator, mounted on the base plate, helps to immobilise the platform, suctioning air from a central cavity delimited by a sealing gasket that runs along the edge of the underside of the base plate, allowing a vacuum to be created under the panel to anchor same to the ground and, consequently, immobilise the platform for the stretching operation.

## Description

### TECHNICAL FIELD

The present invention relates to a device for restoring the panel of a vehicle, intended for its general application in the automotive industry and in particular for use in workshops for repairing the body of vehicles in general. The invention aims to improve and simplify the mechanical means that are used as a tool for stretching the panel to be restored of a vehicle, for which purpose it has been provided that the mechanical means are minimized to a post where a pulley is guided and mounted to carry out the stretching of the panel and arranged to get said post clamped on a support platform provided with bearings, thereby achieving great mobility of the tool around the vehicle to be restored, without having to repeatedly disassemble and assemble the mechanical means that are conventionally anchored to the ground to fix any area of the vehicle.

Similarly, it has been provided that the support platform can be blocked, through anchoring means to the ground in order to compensate for the pull or force performed by the mechanical means during the stretching operation of the panel.

For this purpose, the support platform has means for pushing the plate that forms the base, so that it can lower until it is resting on the ground, which is flanged by a rubber seal delimiting a central cavity in the plate, inside which a vacuum is made, causing the base plate of the platform to be anchored to the ground without any possibility of moving.

Once the stretching work of the panel is completed, the pressurized air is disconnected from the base plate, restarting the rise of the plate to its initial position, to unlock the support platform, which may be displaced through its bearings to other areas of the vehicle for repairing its panel.

### BACKGROUND OF THE INVENTION

In the current prior art, the existence of tools for stretching the panel of a vehicle is already known, which are formed by a tower or metal structure, resting on the ground by rectangular flat legs and provided with straps with an end hook for gripping an eye fixed to the ground, in order to support the stretching force caused by a sheave hanging from the upper end of the stationary tower.

This type of tools has the disadvantage of being anchored to the ground, consequently requiring the positioning of the vehicle near the turret in order to carry out the stretching of the panel to be repaired in the different areas of the vehicle, which is a process that requires the repeated movement of the vehicle for its positioning, which involves effort time and energy, affecting the cost of the repair.

Likewise, other types of tools require the use of anchoring elements to maintain the tower without movement, when it is subjected to the stretching force of the panel, so that the anchoring elements must be close to the tower in order to exert a traction force on it that compensates for the stretching force of the tower supporting panel, which requires that both the tower and the anchoring means must be connected to stabilize the tool during its work around the vehicle.

### OBJECT OF THE INVENTION

The present invention aims to provide the market with a device for restoring the panel of a vehicle, which has a rolling platform where the mechanical means for stretching the panel are mounted, giving the tool great mobility around the vehicle to carry out the different repairs, without having the need to approach the vehicle to the ground areas where the different structural elements of the tool are anchored.

Likewise, the rolling platform has locking means in its structure that allow the platform to be anchored to the ground, while the platform bearings are disabled, all in order to compensate for the force of stretching the panel and immobilise the mechanical means also mounted on the platform.

### DESCRIPTION OF THE INVENTION

According to the invention, the device for restoring the panel of a vehicle has mechanical means for stretching the panel and anchoring means for immobilising the mechanical means during the operation of stretching the panel.

For this purpose, the invention comprises a support platform formed by a rectangular frame in a horizontal position, and provided with bearings, which frame hole is partially plugged by a plate that forms the base of the platform.

In said base plate, a post is clamped, provided with bores for assembling and fixing a pulley at the desired height, for stretching the plate of the vehicle to be repaired, and which operation is manual through a crank, and has a cable or strap that ends in a hook, for gripping and subsequently stretching different areas of the panel of a vehicle.

Said post may be incorporating an upper beam perpendicular to the post for assembling a second winch, which allows the stretching of the vehicle panel in another direction.

All this is arranged so that the mechanical means for stretching the vehicle panel are mounted on the rolling platform, which facilitates the mobility and approach of said mechanical means to the vehicle for repairing it in any area thereof.

Likewise, the invention has provided that the support platform of the mechanical means, has anchoring means to the ground of said platform, at the same time as the locking of the bearings is carried out, and all this in order to immobilise the platform and therefore the mechanical means mounted on said platform, during the stretching operation of the panel.

For this purpose, the base plate of the platform has a pressurized air connection mounted thereon, arranged to supply compressed air to a vacuum generator, acting below the plate, through a bore thereof.

Said base plate of the platform is subjected to the action of vertical springs, and may lower to the ground, by the rotation of a crank mounted on the frame, for which purpose the plate has at least two vertical connecting rods, which are associated with the rotating axis of the crank and are guided during its movement into trays of the plate.

All this is arranged in such a way that the rotation of the crank with the connecting rods in one direction is transformed into a lowering movement of the base plate of the platform, until it is resting on the ground, while the rotation of the crank in the opposite direction would cause the rise of the base plate to its initial position on the platform, assisting the vertical springs to which the plate is subjected.

With the movement of the crank that lowers the base plate to the ground, the platform frame with the bearings is in a position higher than ground, so as to prevent the platform from moving through its bearings.

Similarly, it has been provided that, in order to anchor the base plate to the ground, compressed air can be injected through the connection mounted on the plate, which communicates with a vacuum generator of the plate, entailing in its lower surface of rest on the ground a rubber seal, which delimits a central cavity with the ground, allowing, when creating a vacuum in the base plate, the rolling platform to be immobilised and therefore, the mechanical means to be immobilised during the stretching operation of the vehicle bodywork.

### DESCRIPTION OF THE DRAWINGS

For further understanding of the foregoing, the specification is accompanied by a set of drawings in which the object of the invention is shown, without intending that the mentioned graphic representation constitutes a limitation of the peculiar characteristics of this application.

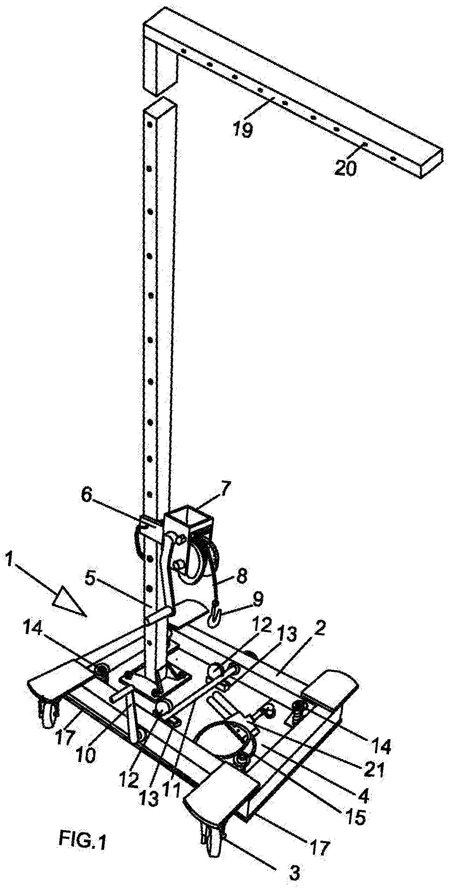

Figure 1.- represents a perspective view of the device for restoring the panel of a vehicle, comprising a rolling platform constituted by a rectangular frame or casing with bearings, and which base is plugged by a plate. On said plate a post is clamped on which a pulley is mounted, whose cable or strap ends in a hook for stretching the bodywork to be restored of a vehicle. On said plate a compressed air connection is also mounted, in communication with a vacuum generator of said plate.

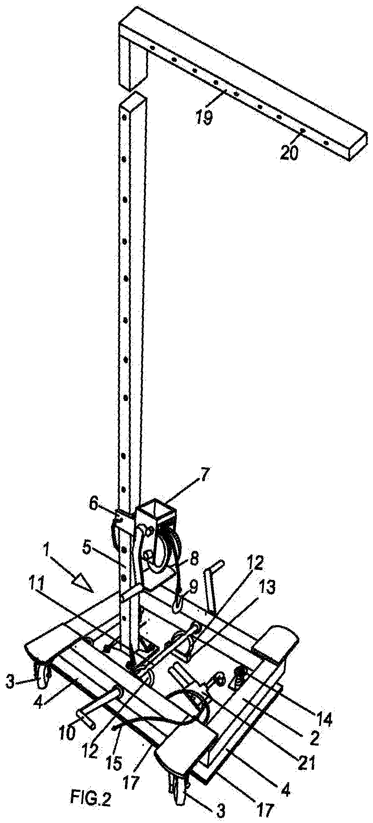

Figure 2- shows the same perspective of the device for restoring the panel of a vehicle, where the base plate is lowered to the ground by the operation of the transverse crank of the frame, the rotation axis of which is associated with connecting rods of the base plate, when guided into trays thereof displace vertically the base plate to the ground, so that it can be immobilised on the ground through a vacuum generator receiving the compressed air through the connection.

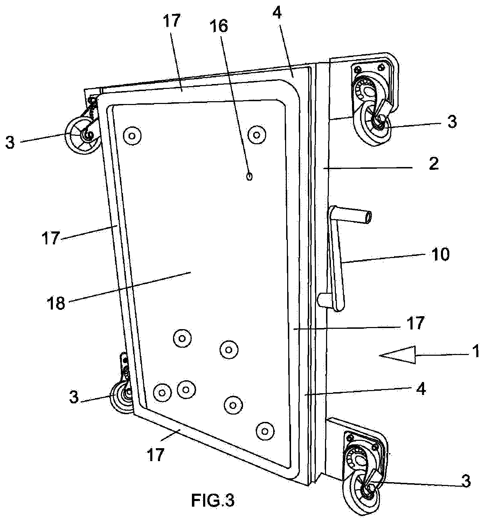

Figure 3.- illustrates a perspective view of the base of the device for restoring the panel of a vehicle, where it is seen that the base plate has a rubber seal near its contour, delimiting a central cavity of the plate, which is in communication with the vacuum generator mounted on said plate through a bore.

### PREFERRED EMBODIMENT OF THE INVENTION

In the following, the different components constituting the device for restoring the panel of a vehicle are detailed and listed, according to a projected embodiment.

The device for restoring the panel of a vehicle has mechanical means for stretching the panel and anchoring means for immobilising the mechanical means during the operation of stretching the panel.

In the first figure it can be seen that the device comprises a support platform (1) formed by a rectangular frame (2) in a horizontal position, provided with bearings (3), which frame hole is partially plugged by a plate (4) that forms the base of the platform.

In said base plate it is seen that the mechanical means are to be anchored, such as the post (5), provided with a series of bores to mount and fix at different heights a support (6) of a pulley (7) with a manually operated crank, and which cable or strap (8) ends in a hook (9), arranged to stretch the panel of a vehicle for its restoration.

In this way, the mechanical means for stretching the panel are mounted on the rolling platform, which facilitates the mobility and approach of said mechanical means around the vehicle for repairing it.

In the second figure it is seen that the base plate (4) of the platform may lower to the ground, by rotating a crank (10) in a position transverse to the frame, for which purpose the plate has at least two vertical connecting rods (12), which are associated with the rotating axis (11) of the crank and which are guided during its rotating movement into trays (13) of the plate, which is subjected to the action of vertical springs (14).

Likewise, in the second figure it can be seen that the crank has been turned with the connecting rods in one direction, and that it has caused a vertical lowering movement of the base plate of the platform, until it was resting on the ground, while the frame (2) of the platform with the bearings (3) is in a position higher than the ground, so as to prevent the platform from moving through its bearings.

In the first and second figures it can be seen that on the base plate (4) of the platform, a pressurized air connector (15) is mounted, which is in communication with a vacuum generator (21), allowing a vacuum to be created below the base plate through a bore (16).

In the third figure, the bore (16) of the base plate can be seen, as well as the rubber seal (17) which is arranged along the lower surface of the base plate and which delimits a central cavity (18).

All this is arranged so that when the compressed air is injected through the connection (15) so as to operate the vacuum generator (21), the base plate (4) can be anchored to the ground, immobilising the rolling platform and, therefore, the mechanical means mounted on the platform, during the stretching operation of the vehicle bodywork.

In the first and second figures it can also be seen that the post (5) anchored onto the base plate (4) may couple an upper beam (19), perpendicular to the post and provided with bores (20), in order to anchor another winch, allowing the stretching of the vehicle panel in other directions.

## Claims

1. DEVICE FOR RESTORING THE PANEL OF A VEHICLE, having mechanical means for stretching the panel and other anchoring means for immobilising the mechanical means during the stretching operation, **characterized in that** it comprises a support platform (1) formed by a rectangular frame (2) in a horizontal position, provided with bearings (3), which frame hole is partially plugged by a base plate (4), and arranged to be anchored to a post (5), receiving the assembling and fixing at different heights of a support (6), of a manually operated pulley (7), and which cable or strap (8) ends with a hook (9), for stretching the panel of a vehicle, while the base plate may be lowered to the ground, by turning a crank (10) in a position transverse to the frame, to this end the plate has at least two vertical connecting rods (12), which are associated with the rotating axis (11) of the crank and are guided during its movement into trays (13) of the plate, which is subjected to the action of vertical springs (14).

2. - DEVICE FOR RESTORING THE PANEL OF A VEHICLE, according to the first claim, **characterized in that** on the base plate (4) of the platform, a pressurized air connection (15) is mounted, and arranged to supply compressed air to a vacuum generator (21), acting below the base plate through a bore (16), which involves, a rubber seal (17) along its lower surface, which delimits a central cavity (18), allowing to create a vacuum for immobilising the plate on the ground and therefore the platform with the mechanical means during the stretching operation of the bodywork of the vehicle.

3. - DEVICE FOR RESTORING THE PANEL OF A VEHICLE, according to the first claim, **characterized in that** the post (5) may be coupled to an upper beam (19), perpendicular to the post, and provided with bores (20), for mounting a second winch, arranged to allow the stretching of the panel of the vehicle in different directions.

4. - DEVICE FOR RESTORING THE PANEL OF A VEHICLE, according to the first and second claims, **characterized in that** the lowering movement of the base plate (4) to the ground causes the horizontal frame (2) with the bearings (3) to be located in a plane higher than the ground, disabling them from displacing the platform.
